# EUROPÄISCHE PATENTSCHRIFT

(11) **EP 1 213 804 B1**
(45) Veröffentlichungstag und Bekanntmachung des Hinweises auf die Patenterteilung: **26.07.2006**
(21) Anmeldenummer: 01128707.5
(22) Anmeldetag: 03.12.2001
(51) Int. Cl.: H02B 1/32, H04Q 1/10

(54) **Schrank der elektrischen Hausinstallation**
Electical cabinet for building
Armoire électrique pour habitation

(30) Priorität: 08.12.2000 DE 10061709
(43) Veröffentlichungstag der Anmeldung: 12.06.2002
(73) Patentinhaber: Hager Electro GmbH, 66131 Saarbrücken (DE)
(72) Erfinder: Scherer, Peter, 67657 Kaiserslautern (DE); Isberg, Martin, 66440 Blieskastel (DE); Wälti, Philippe, 4102 Binningen (DE); Sollberger, Armin, Dr., 4226 Breitenbach (DE)
(74) Vertreter: Bernhardt, Winfrid

(56) Entgegenhaltungen:
- EP-A- 0 270 438
- US-A- 6 086 415

## Beschreibung

Die Erfindung betrifft einen Schrank der elektrischen Hausinstallation mit Einrichtungen zur Energieübertragung und -verteilung, insbesondere einen Zählerschrank oder Verteilerkasten. (Siehe EP-A-0 270 438).

Im Vergleich zu der Energieübertragung und -verteilung erfordert die Verteilung und Installation von Datenleitungen in Gebäuden andere Rücksichten.

Die Gehäuse, die die patch-Felder der Datenübertragungsinstallation aufnehmen, sind von einer besonderen Bauart und Tiefe (z.B. 400 bis 500 mm), da die Datenleitungen nur mit bestimmten Mindestradien gebogen werden dürfen und infolgedessen ein großes Verkabelungsvolumen unterzubringen ist. Die der Befestigung der Datenleitungssteckdosen unmittelbar dienenden sogenannten patch panels sind für die Durchführung der Montagearbeiten schwenkbar an einem Zwischenrahmen des Gehäuses angebracht.

Der Erfindung liegt die Aufgabe zugrunde, ein möglichst einfaches, übersichtliches Gebäudeinstallationssystem zu schaffen.

Gemäß der Erfindung ist als Lösung dieser Aufgabe ein Schrank der eingangs genannten Art vorgesehen, in dem außerdem Einrichtungen zur Datenübertragung und -verteilung mit einem patch-Feld für Datenleitungen vorgesehen sind.
Mit der Beschränkung, z.B. auf höchstens vierundzwanzig Verbindungen in dem patch-Feld, die sich hier von selbst ergibt, ist die Unterbringung des Verkabelungsvolumens in dem z.B. nur 200 bis 225 mm tiefen Schrank für die Energieübertragung und -verteilung, wie einem Zählerschrank, Verteilerkasten usw., mit vertretbarer Mühe noch möglich und damit eine alle Verteiler- u.dgl. Funktionen erfüllende Einrichtung z.B. für Haushalte, kleinere Büros, Arztpraxen usw. geschaffen. Für größere Objekte soll es bei den oben erwähnten Gehäusen besonderer Bauart und Tiefe bleiben. Der neue Schrank kann und soll nicht generell die bisherige Installationsweise ersetzen, die Erfindung besteht insoweit in der Sicht des Maßes und der wie angegeben begrenzten Einsatzmöglichkeit.
Unter Einrichtungen zur Datenübertragung und -verteilung sind auch solche für Telefon und Fernsehen zu verstehen.

Um die Verkabelung bei der geringen Tiefe des zur Verfügung stehenden Raumes zu erleichtern, sind die betreffenden Datenleitungssteckdosen zweckmäßigerweise schräg zur Rückwand des Schrankes ausgerichtet, vorzugsweise zu der Rückwand hin ansteigend.

Die schräge statt der senkrechten Ausrichtung zur Rückwand verringert die Biegung der fest in dem Schrank zu verlegenden Datenleitungen zwischen ihrer Einführung an der Rückseite der Datenleitungssteckdose und der Weiterführung an der Rückwand des Schrankes. Die zu der Rückwand hin ansteigende Ausrichtung hat zur Folge, dass das auf der anderen Seite mit dem Stecker an die Steckdose angeschlossene Kabel, das vor der Steckdose herunterhängt, im Anschluß an den Stecker nur weniger gebogen wird.

Eine weitere Verringerung des Biegeradius' kann erreicht werden, wenn die Datenleitungssteckdosen in seitlichem Abstand voneinander angeordnet sind. Hier kann der Biegung der Datenleitungen zwischen der Rückwand und den Datenleitungssteckdosen noch eine seitliche Komponente überlagert werden.

Es ist jedoch auch möglich, die betreffenden Datenleitungssteckdosen parallel zur Rückwand des Schrankes auszurichten, so dass es auf die Tiefe des Verkabelungsraumes nicht mehr entscheidend ankommt. Die Ausrichtung der Datenleitungssteckdosen im übrigen kann dabei grundsätzlich alle Richtungen haben, vorzugsweise jedoch nach oben oder nach der einen oder anderen Seite.

In einer wesentlichen Weiterbildung besteht die Erfindung, generell ausgedrückt, darin, die Montagetechnik der Einrichtungen zur Energieübertragung und -verteilung auf die Einrichtungen zur Datenübertragung und -verteilung zu übertragen und anzupassen.
In diesem Sinne sind für die Einrichtungen zur Datenübertragung und -verteilung gleiche Rasterfelder vorgesehen wie für die Einrichtungen zur Energieübertragung und -verteilung, und es ist für die Einrichtungen zur Datenübertragung und -verteilung ein Traggerüst gleicher Bauart, vorzugsweise mit senkrechten Tragschienen und waagerechten Befestigungsschienen, insbesondere Hutschienen, vorgesehen wie für die Einrichtungen zur Energieübertragung und -verteilung.

Um bei der Montage weniger behindert zu sein, wird man zweckmäßigerweise auch in dem erfindungsgemäßen Schrank die Datenleitungssteckdosen an einer, vorzugsweise um eine senkrechte Achse, schwenkbaren Halterung anbringen, vorzugsweise das Traggerüst nach Anspruch 4 schwenkbar anordnen.

Eine besonders vorteilhafte Weiterbildung der Erfindung besteht in in gleichem Rastermaß zum Reiheneinbau vorgesehenen, vorzugsweise als Gehäuse gestalteten, Aufnahmen für verschiedene Datenleitungssteckdosen.

Damit werden Datenleitungssteckdosen für verschiedene Kabelarten, wie twisted-pair-Kabel, Koaxialkabel und Glasfaserkabel, sowie Datenleitungssteckdosen verschiedener Hersteller in die gleiche Einbauform gebracht. Sie fügen sich als Modulargeräte, wie z.B. Leitungsschutzschalter, in die Platzvorgaben ein. Im übrigen kommt etwas seitlicher Abstand der Datenleitungssteckdosen voneinander zustande und damit, wie oben erwähnt, etwas mehr Platz für die Verkabelung.
Soweit möglich, wird man versuchen, eine Mehrzahl von Sitzen für verschiedene Datenleitungssteckdosen in derselben Aufnahme einzurichten. Im Regelfall wird jedoch eine spezielle Anpassung zumindest an die Systeme verschiedener Hersteller notwendig sein. Die Breite der Aufnahmen kann im Ausnahmefall das Doppelte oder die Hälfte des Normmaßes betragen, nötigenfalls auch in noch anderer Weise abweichen.

Noch einmal eine Weiterbildung der Erfindung besteht darin, dass die Aufnahmen rückseitig Vorkehrungen zur Befestigung auf Hutschienen aufweisen, wie sie für die Einrichtungen der Energieübertragung und -verteilung in Gebrauch sind.
Das mechanische Befestigungssystem der Einbaugeräte kann in dieser Weise in dem Schrank durchgehend gleich bleiben.

Die Aufnahmen können dann vorne einen Sitz für die Datenleitungssteckdose aufweisen. In einem insbesondere vorgesehenen Fall soll der Sitz die Form eines Rahmens haben, an dem die Datenleitungssteckdose vorne mit einem Absatz anliegt und hinter dem sie mit federnden Widerhaken eingerastet ist. Zur Anpassung an andere für Datenleitungssteckdosen vorgesehene Befestigungsarten können jedoch auch Schraubverbindungen oder Klebestellen usw. vorbereitet sein.

Von besonderer Bedeutung ist ferner die weitere Ausgestaltung, dass die Aufnahmen hinter dem Sitz für die Datenleitungssteckdose einen nach unten und/oder, vorzugsweise, nach oben offenen Raum zur Herausführung der mit der Datenleitungssteckdose fest verbundenen Datenleitung in einer Biegung aufweisen.
Damit wird zugleich der Verkabelungsraum des patch-Feldes in gewisser Weise ein wenig weiter nach vorne erstreckt.

Weiter im einzelnen ist als vorteilhafte Ausgestaltung vorgesehen, dass die Aufnahmen zwei ebene, parallele, senkrechte Seitenwände aufweisen, an denen vorzugsweise vorne kurze Stutzen für den Eingriff in ein Fenster einer Abdeckung ausgebildet sind und zwischen denen ein schräger, vorzugsweise nach hinten ansteigender, Boden und im wesentlichen gleichläufig mit diesem eine schräge Decke angeordnet sind und der so gebildete Raum einen rückwärtigen Abschnitt der Datenleitungssteckdose aufnimmt, die mit einem vorderen Abschnitt aus der Aufnahme herausragt.

Die Datenleitungssteckdosen können auch Mehrfachsteckdosen sein oder in Mehrzahl in der Aufnahme angeordnet sein.
Der erfindungsgemäße Schrank kann die Zentralstelle der gesamten Verkabelung eines Hauses in allen ihren Spielarten werden; er kann alle Komponenten und Leitungen aufnehmen.

Die Zeichnungen geben ein Ausführungsbeispiel der Erfindung wieder.
- Fig. 1: zeigt einen Schrank der Elektroinstallation bei abgenommener Tür in isometrischer Darstellung,

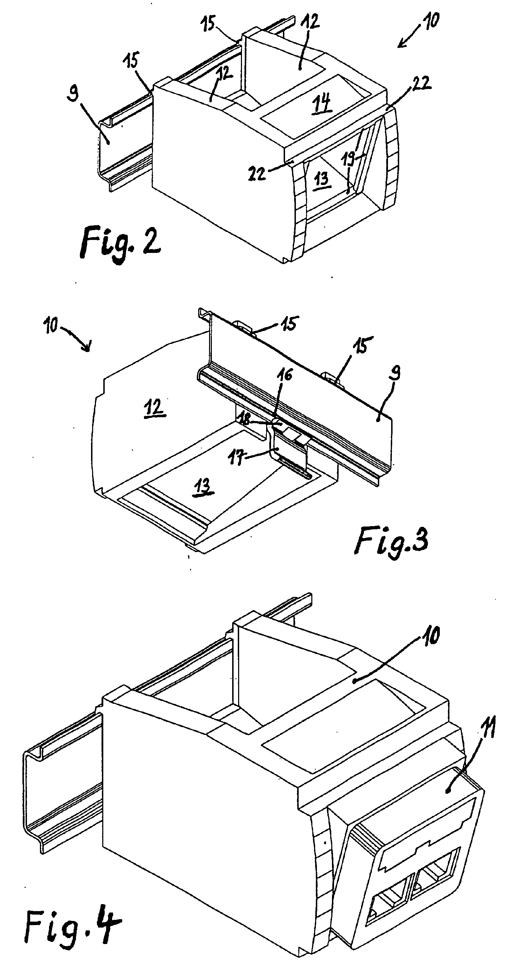

- Fig. 2: zeigt ein Einzelteil, nämlich eine Aufnahme für eine Datenleitungssteckdose, in isometrischer Darstellung schräg von vorne und oben,
- Fig. 3: zeigt die Aufnahme in isometrischer Darstellung schräg von hinten und unten,
- Fig. 4: zeigt die Aufnahme mit eingesetzter Datenleitungssteckdose in der isometrischen Darstellung der Fig. 2 in größerem Maßstab,
- Fig. 5: zeigt die Datenleitungssteckdose für sich in isometrischer Darstellung schräg von hinten,
- Fig. 6: zeigt schematisch einen Querschnitt durch einen Teil des Schrankes nach Fig. 1.

Der mit 1 bezeichnete Schrank stellt an sich einen Zählerschrank mit zwei Zählerfeldern 2 dar.

In dem linken Zählerfeld 2 ist ein Zählerplatz 4 angeordnet, d.h. die vorgefertigte Installation für einen bei 5 einzusetzenden Zähler einschließlich eines zugehörigen Verteilers mit Leitungsschutzschaltern 6 usw..

Das rechte Zählerfeld ist zu einer Funktionsfläche 3 für Datenübertragung und -verteilung umbestimmt worden und mit einem für diese Zwecke konzipierten Traggerüst 30 versehen worden.

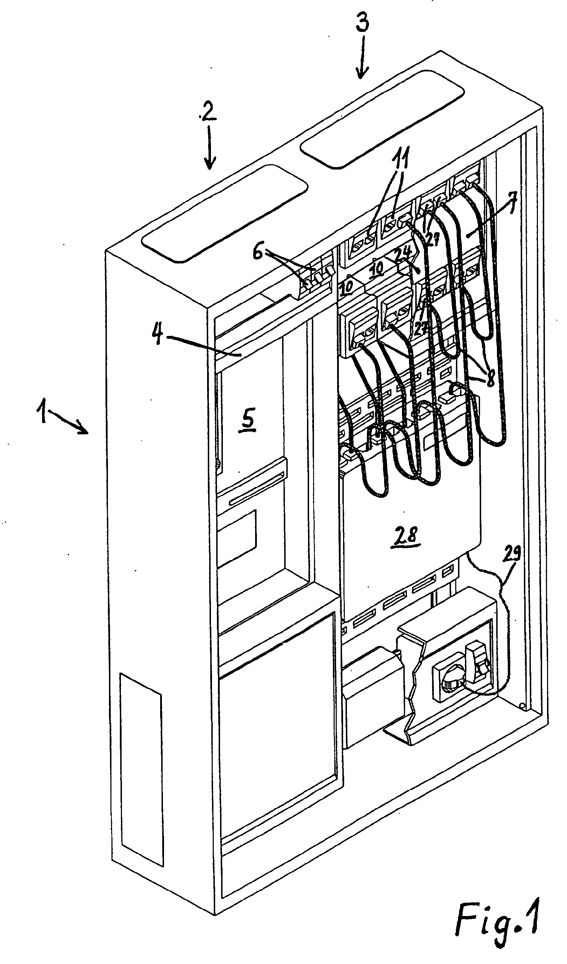

In einem oberen Abschnitt der Funktionsfläche 3 ist auf dem Traggerüst 30 ein patch-Feld 7 für Datenkabel bzw. Datenleitungen 25 eingerichtet.
Das Traggerüst 30 weist hier, in Fig. 1 verdeckte, Hutschienen 9 auf, auf denen Aufnahmen 10 für Datenleitungssteckdosen 11 in Reihe nebeneinander angebracht sind.

Die Aufnahmen 10 haben die Form eines Gehäuses mit zwei senkrechten parallelen Seitenwänden 12, einem zwischen diesen schräg nach hinten ansteigenden Boden 13 und einer zu dem Boden 13 parallelen Decke 14. Die Decke 14 erstreckt sich nur in einem vorderen Abschnitt; in dem restlichen hinteren Abschnitt ist das Gehäuse nach oben offen. Nach hinten wird es weitgehend durch die Hutschiene 9 abgeschlossen.
Zur Befestigung auf der Hutschiene dienen zwei den oberen Flansch der Hutschiene übergreifende starre Haken 15 und ein den unteren Flansch übergreifender, mit einer schrägen Rutschfläche 16 und einem Rückbiegegriff 17 versehener Schnapphaken 18.
Als Sitz für die Datenleitungssteckdose 11 ist an den Innenseiten der Seitenwände 12, des Bodens 13 und der Decke 14 ein Rahmen 19 ausgebildet. Der Rahmen 19 ist senkrecht zu dem nach hinten ansteigenden Boden 13 und der mit ihm gleichlaufenden Decke 14 ausgerichtet.
An der Vorderseite der Seitenwände 12 ausgebildete, flache, leicht nach vorne ausgewölbte Stutzen 22 ragen, oben und unten bündig, in ein Fenster 23 einer Abdeckung 24.

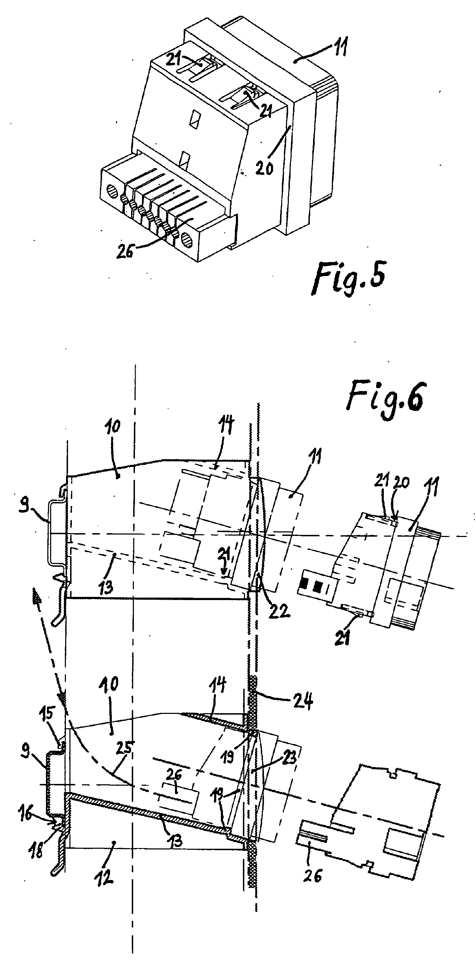

Die Datenleitungssteckdose 11 liegt mit einem Absatz 20 vorne an dem Rahmen 19 an und ist mit federnden Widerhaken 21 hinter ihm eingerastet. Mit einem Teil ihrer Länge erstreckt sie sich hinter dem Rahmen 19 in die Aufnahme 10 hinein, mit dem anderen Teil ragt sie nach vorne heraus.
Die einen Anschlußstutzen 26 der Datenleitungssteckdose 11 verlassende Datenleitung 25 der festen Installation ist schon in dem durch die Aufnahme 10 gebildeten Gehäuse abgebogen und im hinteren Bereich aus ihm nach oben herausgeführt (Fig. 6). Bereits im Bereich zwischen den beiden übereinander angeordneten Hutschienen 9 ist es weitgehend parallel zur, nicht gezeichneten, Rückwand des Schrankes 1 ausgerichtet. Infolge der aus der schrägen Anordnung des Rahmens 19 als Sitz der Datenleitungssteckdose 11 sich ergebenden Schrägstellung der Datenleitungssteckdose 11 braucht die Datenleitung 25 nur um einen entsprechend kleineren Winkel gebogen zu werden. Zumal die in den nebeneinander angeordneten Aufnahmen 10 sitzenden Datenleitungssteckdosen 11 etwas seitlichen Abstand voneinander haben, können die Datenleitungen 25 zusätzlich zu ihrer Biegung nach oben etwas zur Seite gebogen werden, womit sich der Biegeradius weiter vermindert.

Die Datenkabel 8 für die Herstellung der wahlfreien Verbindungen, d.h. einer ankommenden mit einer wegführenden Datenleitung, sind mit Steckern 27 angeschlossen und hängen in dem Schrankraum vor der Abdeckung 24 frei herunter. Die Anstellung der Datenleitungssteckdosen 11 schräg nach oben vermindert auch hier den Winkel der Umbiegung.

Die Datenleitungen 8 verbinden zum einen Teil zwei Datenleitungssteckdosen 11 und zum anderen Teil eine Datenleitungssteckdose 11 mit einem aktiven Element 28, beispielsweise einem HUB-Verstärker.
Bei 29 ist die Spannungsversorgung des aktiven Elements 28 angedeutet.
Für das aktive Element 28 und die Vorrichtungen zu seiner Spannungsversorgung weist das Traggerüst 30 vorbereitete Plätze auf.

## Patentansprüche

1. Schrank der elektrischen Hausinstallation mit Einrichtungen (4-6) zur Energieübertragung und -verteilung, insbesondere Zählerschrank oder Verteilerkasten,
**dadurch gekennzeichnet,**
**dass** in dem Schrank (1) außerdem Einrichtungen zur Datenübertragung und -verteilung (7-30)mit einem patch-Feld (7) für Datenleitungen (8,25) vorgesehen sind.

2. Schrank nach Anspruch 1,
**dadurch gekennzeichnet,**
**dass** die Einrichtungen zur Datenübertragung und -verteilung (7-30)femer aktive Elemente (28), ggf. femer Vorrichtungen zur Spannungsversorgung (29)für diese, umfassen.

3. Schrank nach Anspruch 1 oder 2,
**dadurch gekennzeichnet,**
**dass** für die Einrichtungen zur Datenübertragung und -verteilung (7-30) gleiche Rasterfelder vorgesehen sind wie für die Einrichtungen zur Energieübertragung und -verteilung (4 -6).

4. Schrank nach einem der Ansprüche 1 bis 3,
**dadurch gekennzeichnet,**
**dass** für die Einrichtungen zur Datenübertragung und -verteilung (7-30) ein Traggerüst (30) gleicher Bauart, vorzugsweise mit senkrechten Tragschienen und waagerechten Befestigungsschienen, insbesondere Hutschienen (9), vorgesehen ist wie für die Einrichtungen zur Energieübertragung und -verteilung (4-6).

5. Schrank nach einem der Ansprüche 1 bis 3,
**dadurch gekennzeichnet,**
**dass** die Datenleitungssteckdosen (11) des patch-Feldes (7) mindestens zum Teil schräg zur Rückwand des Schrankes (1) ausgerichtet sind, vorzugsweise zu der Rückwand hin ansteigend.

6. Schrank nach einem der Ansprüche 1 bis 5,
**dadurch gekennzeichnet,**
**dass** die Datenleitungssteckdosen des patch-Feldes (7) mindestens zum Teil parallel zur Rückwand des Schrankes ausgerichtet sind.

7. Schrank nach einem der Ansprüche 1 bis 6,
**dadurch gekennzeichnet,**
**dass** die Datenleitungssteckdosen (11) des patch-Feldes (7) mindestens zum Teil in seitlichem Abstand voneinander angeordnet sind.

8. Schrank nach einem der Ansprüche 1 bis 7,
**dadurch gekennzeichnet,**
**dass** die betreffenden Datenleitungssteckdosen (11) an einer, vorzugsweise um eine senkrechte Achse, schwenkbaren Halterung angebracht sind, vorzugsweise das Traggerüst (30) nach Anspruch 4 schwenkbar angeordnet ist.

9. Schrank nach einem der Ansprüche 1 bis 8,
**gekennzeichnet durch** in gleichem Rastermaß zum Reiheneinbau vorgesehene, vorzugsweise als Gehäuse gestaltete, Aufnahmen (10) für verschiedene Datenleitungssteckdosen (11).

10. Schrank nach Anspruch 9,
**gekennzeichnet durch** Datenleitungssteckdosen (11) für Telefonkabel, Computerkabel, Fernsehkabel, ggf. Glasfaserkabel, desselben Herstellers oder verschiedener Hersteller.

11. Schrank nach Anspruch 9 oder 10,
**dadurch gekennzeichnet,**
**dass** die Aufnahmen (10) rückseitig Vorkehrungen (15-18) zur Befestigung auf Hutschienen (9) aufweisen.

12. Schrank nach einem der Ansprüche 9 bis 11,
**dadurch gekennzeichnet,**
**dass** die Aufnahmen (10) vome einen Sitz (19) für die Datenleitungssteckdose (11) aufweisen, insbesondere in Form eines Rahmens (19), an dem die Datenleitungssteckdose (11) vome mit einem Absatz (20) anliegt und hinter dem sie mit federnden Widerhaken (21) eingerastet ist.

13. Schrank nach Anspruch 12,
**dadurch gekennzeichnet,**
**dass** die Aufnahmen (10) hinter dem Sitz (19) für die Datenleitungssteckdose (11) einen nach unten und/oder, vorzugsweise, nach oben offenen Raum zur Herausführung der mit der Datenleitungssteckdose (11) fest verbundenen Datenleitung in einer Biegung aufweisen.

14. Schrank nach einem der Ansprüche 9 bis 13,
**dadurch gekennzeichnet,**
**dass** die Aufnahmen (10) zwei ebene, parallele, senkrechte Seitenwände (12) aufweisen, an denen vorzugsweise vorne kurze Stutzen (22) für den Eingriff in ein Fenster (23) einer Abdeckung (24) ausgebildet sind und zwischen denen ein schräger, vorzugsweise nach hinten ansteigender, Boden (13) und im wesentlichen gleichläufig mit diesem eine schräge Decke (14) angeordnet sind und der so gebildete Raum einen rückwärtigen Abschnitt der Datenleitungssteckdose (11) aufnimmt, die mit einem vorderen Abschnitt aus der Aufnahme (10) herausragt.

## Claims

1. Cabinet for domestic electrical installation, having devices (4-6) for transmitting and distributing power, in particular a meter cabinet or distributor box,
**characterized**
**in that** devices (7-30) for transmitting and distributing data, which comprise a patch panel (7) for data lines (8, 25), are also provided in the cabinet (1).

2. Cabinet according to Claim 1,
**characterized**
**in that** the devices (7-30) for transmitting and distributing data also comprise active elements (28), and possibly also apparatuses (29) for supplying power for the latter.

3. Cabinet according to Claim 1 or 2,
**characterized**
**in that** the same grid panels are provided for the devices (7-30) for transmitting and distributing data as are provided for the devices (4-6) for transmitting and distributing power.

4. Cabinet according to one of Claims 1 to 3,
**characterized**
**in that** a support framework (30) of the same design, preferably with perpendicular support rails and horizontal fixing rails, in particular top-hat rails (9), is provided for the devices (7-30) for transmitting and distributing data as is provided for the devices (4-6) for transmitting and distributing power.

5. Cabinet according to one of Claims 1 to 3,
**characterized**
**in that** the data-line sockets (11) of the patch panel (7) are oriented at least partly obliquely to the rear wall of the cabinet (1), preferably such that they rise towards the rear wall.

6. Cabinet according to one of Claims 1 to 5,
**characterized**
**in that** the data-line sockets of the patch panel (7) are oriented at least partly parallel to the rear wall of the cabinet.

7. Cabinet according to one of Claims 1 to 6,
**characterized**
**in that** the data-line sockets (11) of the patch panel (7) are arranged at least partly at a lateral distance from one another.

8. Cabinet according to one of Claims 1 to 7,
**characterized**
**in that** the data-line sockets (11) in question are fitted to a mount which can pivot, preferably about a perpendicular axis, the support framework (30) according to Claim 4 is preferably arranged such that it can pivot.

9. Cabinet according to one of Claims 1 to 8,
**characterized by** holders (10) for different data-line sockets (11), which holders are provided in the same grid pattern for series installation and are preferably in the form of a housing.

10. Cabinet according to Claim 9,
**characterized by** data-line sockets (11) for telephone cables, computer cables, television cables, and possibly optical fibre cables, from the same manufacturer or from different manufacturers.

11. Cabinet according to Claim 9 or 10,
**characterized**
**in that** the holders (10) have, at the rear, preparatory means (15-18) for fixing purposes on the top-hat rails (9).

12. Cabinet according to one of Claims 9 to 11,
**characterized**
**in that** the holders (10) have a seat (19) at the front for the data-line socket (11), in particular in the form of a frame (19) against the front of which a step (20) of the data-line socket (11) bears and behind which the said data-line socket is latched in by sprung barbs (21).

13. Cabinet according to Claim 12,
**characterized**
**in that**, behind the seat (19) for the data-line socket (11), the holders (10) have an area, which is open at the bottom and/or, preferably, at the top, for guiding out the data line, which is firmly connected to the data-line socket (11), such that it is bent.

14. Cabinet according to one of Claims 9 to 13,
**characterized**
**in that** the holders (10) have two flat, parallel, perpendicular side walls (12) which have formed on them, preferably at the front, short connection pieces (22) for engaging in a window (23) in a cover (24) and between which a sloping base (13), which preferably rises to the rear, and, substantially in the same direction as the latter, a sloping covering (14) are arranged, and the area which is formed in this way holds a rear section of the data-line socket (11) whose front section projects from the holder (10).

## Revendications

1. Armoire électrique pour installations domestiques, comprenant des moyens (4-6) pour la transmission et la distribution d'énergie, en particulier armoire de compteur ou armoire de distribution, **caractérisée en ce que** :
il est en outre prévu dans l'armoire (1) des moyens pour la transmission et la distribution de données (7-30) avec un champ composite ("patch") (7) pour des lignes de données (8, 25).

2. Armoire électrique selon la revendication 1, **caractérisée en ce que** les moyens pour la transmission et la distribution de données (7-30) comprennent en outre des éléments actifs (28) et le cas échéant en outre des dispositifs pour leur alimentation électrique (29).

3. Armoire électrique selon la revendication 1 ou 2, **caractérisée en ce que**, pour les moyens de transmission et de distribution de données (7-30) il est prévu les mêmes champs de trame que pour les moyens de transmission et de distribution d'énergie (4-6).

4. Armoire électrique selon l'une des revendications 1 à 3, **caractérisée en ce que**, pour les moyens de transmission et de distribution de données (7-30), il est prévu une ossature portante (30) de même type structurel, de préférence avec des rails porteurs verticaux et des rails de fixation horizontaux, en particulier des profiles de chapeau (9) que pour les moyens de transmission et de distribution d'énergie (4-6).

5. Armoire électrique selon l'une des revendications 1 à 3, **caractérisée en ce que** les prises (11) pour les lignes de données du champ patch (7) sont orientées au moins partiellement en oblique vers la paroi postérieure de l'armoire (1), de préférence en montant en direction de la paroi postérieure.

6. Armoire électrique selon l'une des revendications 1 à 5, **caractérisée en ce que** les prises pour les lignes de données du champ patch (7) sont orientées au moins partiellement parallèlement à la paroi postérieure de l'armoire.

7. Armoire électrique selon l'une des revendications 1 à 6, **caractérisée en ce que** les prises (11) pour les lignes de données du champ patch (7) sont agencées au moins partiellement à distance latérale les unes des autres.

8. Armoire électrique selon l'une des revendications 1 à 7, **caractérisée en ce que** les prises concernées (11) pour les lignes de données sont montées sur une monture pivotante, de préférence autour d'un axe vertical, et de préférence l'ossature portante (30) de la revendication 4 est agencée pivotante.

9. Armoire électrique selon l'une des revendications 1 à 8, **caractérisée par** des logements (10), prévus à la même distance de trame par rapport à un insert de rangée, et conçus de préférence sous forme de boîtiers, pour différentes prises (11) pour les lignes de données.

10. Armoire électrique selon la revendication 9, **caractérisée par** des prises (11) pour des lignes de données destinées à des câbles téléphoniques, à des câbles d'ordinateur, à des câbles de télévision, le cas échéant des câbles à fibres de verre, provenant du même fabricant ou de différents fabricants.

11. Armoire électrique selon la revendication 9 ou 10, **caractérisée en ce que** les logements (10) présentent sur le côté postérieur des moyens (15-18) pour la fixation sur des profilés de chapeau (9).

12. Armoire électrique selon l'une des revendications 9 à 11, **caractérisée en ce que** les logements (10) comprennent à l'avant un siège (19) pour la prise (11) pour ligne de données, en particulier sous la forme d'un cadre (19) contre lequel s'applique la prise (11) pour ligne de données à l'avant avec un talon (20) et derrière lequel la prise est enclenchée au moyen d'un crochet antagoniste (21) à effet élastique.

13. Armoire électrique selon la revendication 12, **caractérisée en ce que** les logements (10) présentent, derrière le siège (19) pour la prise (11) pour ligne de données, un espace ouvert vers le bas et/ou de préférence vers le haut, pour faire sortir la ligne de données fermement reliée à la prise (11) pour ligne de données, dans un coude.

14. Armoire électrique selon l'une des revendications 9 à 13, **caractérisée en ce que** les logements (10) présentent deux parois latérales (12) planes parallèles et verticales, sur lesquelles sont réalisés de préférence à l'avant des manchons courts (22) pour l'engagement dans une fenêtre (23) d'un recouvrement (24), et entre lesquelles sont agencés un fond oblique (13) ascendant de préférence vers l'arrière et un plafond oblique (14) sensiblement dans le même sens que le fond, et l'espace ainsi formé reçoit un tronçon de postérieur de la prise (11) pour ligne de données, laquelle fait saillie hors du logement (10) par un tronçon antérieur.
